(19) Europäisches Patentamt / European Patent Office / Office européen des brevets

(11) **EP 2 095 705 A2**

(12) **EUROPEAN PATENT APPLICATION**

(43) Date of publication:
**02.09.2009 Bulletin 2009/36**

(51) Int Cl.:
*A01G 9/14* (2006.01)    *A01G 13/02* (2006.01)

(21) Application number: **08386026.2**

(22) Date of filing: **20.11.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **27.12.2007 GR 20070100778**

(71) Applicant: **Daios, Asterios D.**
**592 00 Naousa (GR)**

(72) Inventor: **Daios, Asterios D.**
**592 00 Naousa (GR)**

(74) Representative: **Argyriadis, Korinna**
**Sina Street 14**
**106 72 Athens (GR)**

(54) **Plastic film for greenhouses or tunnels**

(57) The invention refers to a greenhouse or tunnel plastic film, consisting of separate plastic films (more than one) bonded together in a clear and defined way to allow free air and moisture movement from the area they protect toward the external surroundings. This achieves renewal of the air in the protected space and because of that better conditions for development of protected crops are ensured while the cost of initial investment and operating costs throughout the facility's life period are minimized leaving direct benefits for the grower. The advantage of this invention is that it offers freedom of choice between separate plastic films with different properties, which are the result of the raw materials used, of their stratification, their different additives, the different content of these additives and the width of sealed films.

FIGURE 1

EP 2 095 705 A2

# EP 2 095 705 A2

**Description**

The invention refers to a new type of plastic film for greenhouses or tunnels, consisting of separate plastic films (more than one) that are bonded together in a clear and defined way to allow free air and moisture movement from the area they protect, toward the external surroundings. This allows air renewal inside the protected area and because of that, better conditions for the development of protected crops are ensured while the cost of initial investment and operating costs throughout the facility's life period are minimized leaving direct benefits for the grower.

Systematic and intensive agricultural product cultivation requires controlling and regulating plant growth conditions. The practice widely applied during the last decades is the construction of greenhouses or tunnels comprised by a frame acting as a carrier body and covering material over the frame, which may be glass or plastic film. This creates an area protected from weather conditions, within which plants can grow in controlled temperature and humidity conditions.

The most common choice in protected area coverage is plastic films, since their use is comparatively much cheaper and easier because they consist of only one piece, which due to its flexibility and elasticity may be placed on the greenhouse or tunnel frame in a short period of time and relatively easily. Cutting edge technology plastic films are multilayered and specifically they feature three or more layers comprised by materials that fall into the thermoplastics category and are in particular polyolefins, polyamides, PVC etc. The state of the art allows the production of such one-piece films having a width of 20m and extensive length.

The disadvantage of such structures is that they require special solutions as far as the area ventilation is concerned. It is commonly known that many plants cease to function normally when ambient temperature exceeds certain temperature limits (usually over 35°C) and humidity. Especially on days of intense sunshine the temperature inside the protected area may exceed the above limit a lot, so immediate air renewal is required. High humidity also developing within the protected area causes many diseases such as botrytis, making air renewal an imperative need. This particular problem is indeed so intense that it has become a field of experimentation and implementation of multitude technical solutions either manual or fully automated, according always to the sensitivity of cultivated products at high temperature and humidity levels.

Many patents have also been filed concerning this field, trying in many mechanically clever and creative ways to solve the problem of microclimate control within the protected area. Some of these patents are JP8172933, FR2788195, JP2005278581, JP2005143448, JP2004350506, JP2004097085, RO119243, NL9100069, and DE3934375. These patents refer to special structures and mechanisms on the upper part of the greenhouse or tunnel frame so air renewal is allowed inside the protected area.

These structures, however, increase installation costs and therefore initial investment costs, as they involve complex mechanical solutions requiring specific and specialized know-how and experimentation resulting in further cost increase. Additionally, during operation a qualified person is required for monitoring weather conditions and temperature and humidity levels inside the protected area, in order to decide the opening or closing of the construction aiming to renew the air.

With this invention an entirely new way of solving the problem is proposed, according to which the frame (7) is just simply a support structure while air renewal is achieved through the very design of the plastic film itself without requiring any human intervention.

To achieve this, the plastic film is not a single piece in the way applied today, but comprises of several separate plastic films bonded together two by two, constituting each one of them a width extension and running over the entire film length. Therefore the final plastic film width equals approximately with the sum of all individual plastic film width it comprises, while the final length is common for all.

Plastic films are bonded together in a way that facilitates the flow of air but prevents rainwater from entering the protected area and this may be implemented only if there is a successive lap from the central film overlapping the close next films reminiscent of a tile roof cover. So water falling on the central plastic film (1) after passing the overlap zones runs towards both sides of the film (2 and 3), etc. and from there to the ground.

At the same time inside the greenhouse or the tunnel, water vapour liquidizing on the inner surface of the central plastic film (1) flows towards the overlap areas on its both sides and flows outside the covered area and on the outer surface of plastic films (2) and (3) through openings created between the sealings and thus any harmful effect on the quality of cultivated plants is avoided. For this particular purpose bonded films may feature special additives known as antidrip, which reduce surface tension immigrating on the surface from the mass of the plastic film therefore allowing liquidized vapour to run towards the openings with greater ease and so the plastic film is more transparent. The advantage this invention provides is that at the points needed the corresponding plastic films may have a greater percentage of antidrip additives so their functioning may be more effective. The transparency of the plastic film is this way maintained and no droplets are being formed acting like magnifier lenses that focus sunlight which results in causing bums on the plants.

Another advantage of this invention is that during very windy days, the protected area is not endangered by pressures created, thanks to the openings through which the air may discharge.

An also important advantage of this method is that it uses plastic films of relatively small width, so the mechanical equipment (blown film line) as well is less complex, easier to handle, with small operating cost and comparatively very flexible.

Figures 1 to 3 present the following:

Figure 1    View and section of a greenhouse or tunnel plastic film construction solution, consisting of 3 plastic films (1,2,3) which are bonded at length, discontinuously with sectional sealings (6).

Figure 2    View and section of a greenhouse or tunnel plastic film construction solution, consisting of 5 plastic films (1,2,3,4,5) which are bonded at length discontinuously with sectional sealings (6)

Figure 3    View and section of a construction solution of sectional sealings (6) placed with an inclination in relation to the greenhouse or tunnel plastic film central axis.

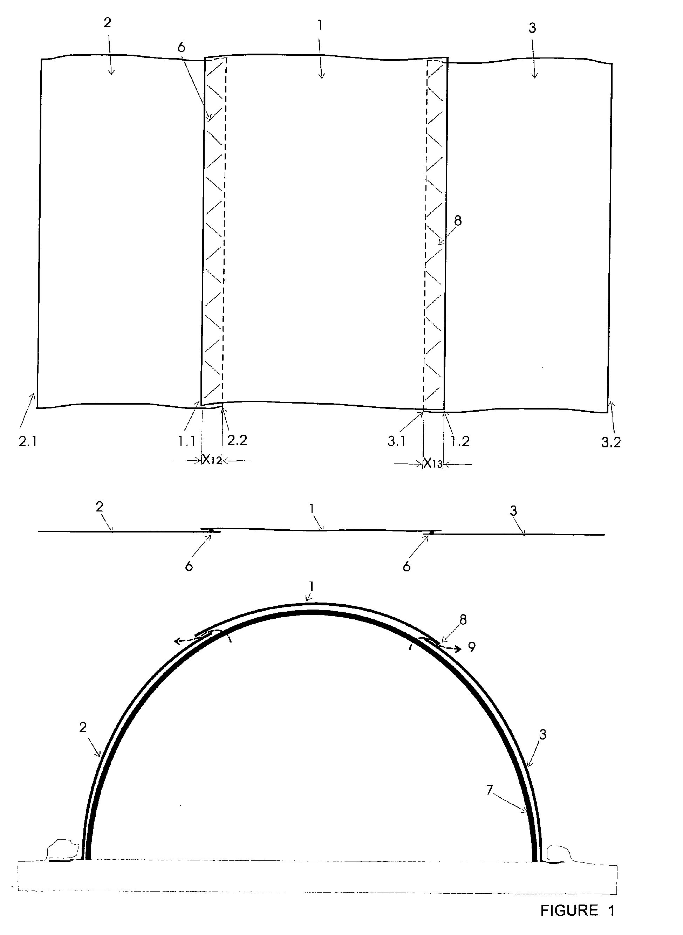

At the first invention implementation fashion (Figure 1) three individual plastic films 1,2,3 manufactured by any of the known production methods (blown film or cast film) are bonded together two by two, throughout their entire length. These films me be single - simpler and preferred solution - or double in a tube form for a better insulation of the covered area.

The sealing is made after the plastic films are first overlapped one over the other in a way reminiscent of a successive layer on a tile roof. So:

The left 1.1 edge of film 1 will overlap the 2.2 right edge in a zone with width $x_{12}$ from plastic film 2 and throughout its entire length while right edge 1.2 of plastic film 1 will overlap the left edge 3.1 in a zone with width $x_{13}$ from plastic film 3 and throughout its entire length. So plastic film 1 has been sealed at this both ends 1.1 and 1.2 with films 2 and 3 after having overlapped them in a zone with width $x_{12}$ and $x_{13}$ respectively. For the sake of symmetry it is preferable that these zones are of the same width.

The total plastic film width in this case is the sum of the width of all individual plastic films (1,2,3) if the width of the two overlap zones is deducted i.e.

$$B = b_1 + b_2 + b_3 - x_{12} - x_{13}$$

Where $b_i$ is the corresponding width of the individual plastic film i and xij is the width of the overlap zone between two successive plastic films i and j.

Plastic films (2) and (3) bonded to plastic film (1) may have the same or larger width than plastic film 1, when the lengthways openings are located at a relatively high point of the protected area, or be smaller than plastic film 1, when the lengthwise openings are located at a relatively low point of the protected area. Also all individual plastic films could be of the same width $b_i$.

Additionally central plastic film (1) could always be of fixed width and the final plastic film width could depend only on the widths of the individual plastic films on both its sides and thus simplify the production through choice of individual plastic films with less initial dimensions.

Plastic films on the overlap zones are bonded together in sectional sealings (6). The distance between two consecutive sectional sealings (6) leaves an opening (8) between the two individual plastic films that is repeated due to the recurrence of sectional sealings throughout the entire length of the plastic film. So the plastic film has so many openings (8) in each overlap zone as are the sectional sealing recurrences (6).

This creates corresponding opening zones throughout the entire length of the plastic film and where there are overlaps corresponding opening zones are being created that will act as ventilation zones of the covered area during the use of the plastic film.

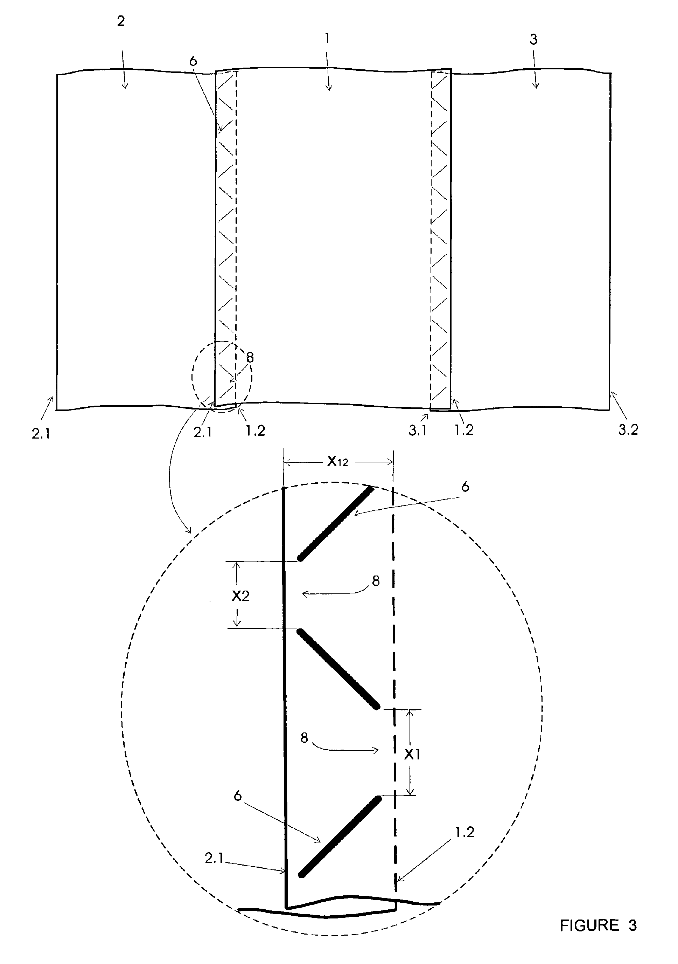

Openings (8) may be the same or different between the recurrent sealings -for instance x1 = x2 in Figure 3-.

The recurrent sectional sealings between the individual plastic films at the overlap zones may have any form and arrangement, but they must be preferably sectional linear (6) and inclined to the longitudinal axis of the plastic film and at an angle between 30°-60°.

Figures 1 to 3 show the special case where the sectional sealing has a 45° inclination and its next is 135° i.e. every second sealing is symmetrical on the transverse axis of the plastic films.

In this arrangement the force transferred from the plastic film on the sealings is more uniform. Also the loosening of the opening (8) is more facilitated created by two consecutive sectional sealings due to the plastic film companding.

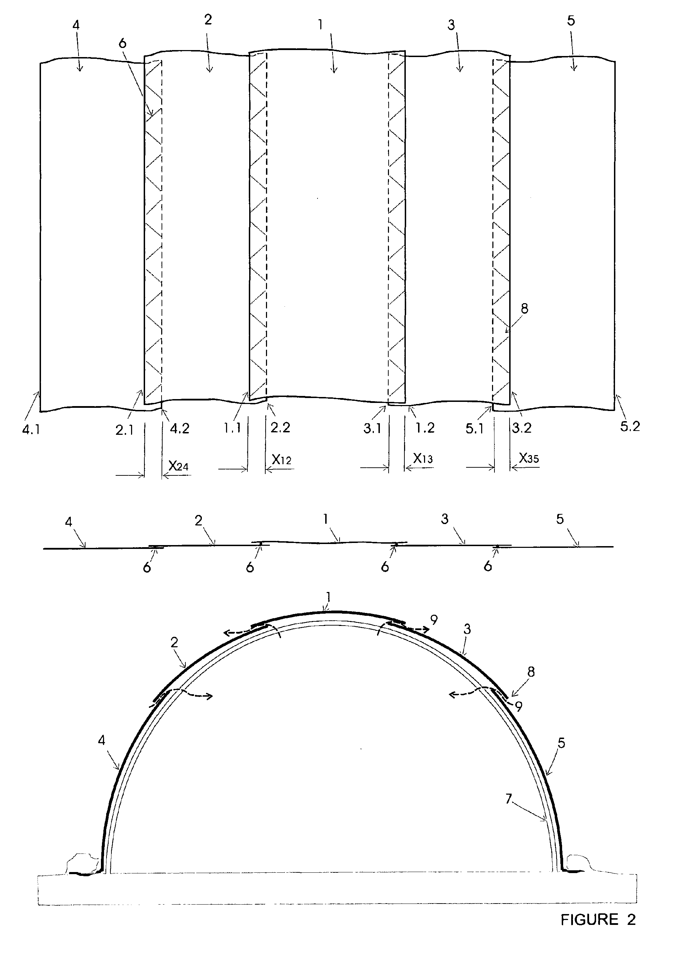

According to a second way to implement the invention (Figure 2) five individual plastic films 1,2,3,4,5 manufactured by any of the known production methods are bonded together two by two and throughout their entire length. The position between them as well as the bonding way is similar to the one described in the previous example.

Then further to the above, the other side of plastic film 2 (2.1) is overlaps edge 4.2 of film 4 and edge 3.2 of film 3 overlaps edge 5.1 of plastic film5.

The plastic film total width in this case is the sum of the width of all individual plastic films 1,2,3,4,5 if the width of the four overlap zones is deducted i.e.

$$B = b_1 + b_2 + b_3 + b_4 + b_5 - x_{12} - x_{13} - x_{24} - x_{35}$$

Similarly might be done, if we refer to more individual plastic films comprising the final plastic film.

As seen from the above description the number of the individual plastic films must be preferably odd, because this way the central plastic film (1) has a covering cap role over its immediately adjoining ones.

This is important because the greenhouse or the tunnel is a symmetrical construction and the central sheet (1) will cover its top along its whole length while the one on the sides will be positioned symmetrically to its frame (7). For the greenhouse or tunnel ventilation this opening symmetrical arrangement is very important. So it would be preferable for all films on the sides to be equal to one another and thus maintain the symmetry of the entire construction. For example, individual plastic films 2 and 3 must be of same width between them and individual plastic films 4 and 5 (if any) must be of same width between them etc. This way ensures the symmetry of the openings at the axis along the finished product and furthermore the better functioning of air flow located between the openings.

It is understandable that the solution of multiple sealed films could be applied also in the event of even-numbered films e.g. 2, but in this case one film should be definitely bigger than the other one so that when placing the film on the greenhouse the overlap zone will not be on the top of the greenhouse frame and thus prevent the inflow of rain water.

Ventilation may be self-regulating and that is another advantage of this method, because successive film companding is a property affected by plastic film temperature. In other words, during a day of high temperatures successive plastics expand and become more flexible and the openings are loosened (8) so air and humidity flow (9) is facilitated. On the other side at times of low temperature plastic films shrink so the openings close (8) and this limits energy loss from the protected area. This natural phenomenon is enhanced if plastic films are produced by different raw material composition thus having different expansion coefficients and causing the facilitation of air and humidity flow from the openings. This function can be achieved through this invention as opposed to the state of the art of one-piece plastic films.

Besides from selecting the individual plastic films' width, this invention gives us also the opportunity to play with other parameters to achieve an even more specialized plastic film using individual plastic films with different properties, but in such a way that their sealing is feasible. So, individual plastic films can be either monolayer or multilayered usually produced by the method of blown film extrusion. They may have different properties between them or different properties in each layer due to raw materials and additives, such as absorption of infrared radiation, ultraviolet radiation filtering, visible light diffusion etc.

For example, during the first implementation fashion of the invention (Figure 1) plastic film 1 may contain additional antidrip. Water vapors found on plastic film 1 -due to antidrip action- are driven by gravity to its edges (1.1 and 1.2) at the points it is bonded with plastic films 2 and 3 where the openings are formed from where the water vapors can flow outside the protected area. The major advantage of this invention is that antidrip additives are used only where it is deemed necessary, i.e. in the upper part of the protected area where water vapors gather.

The same applies to other additives, such as infrared radiation restraint additives (IR additives), protection from ultraviolet radiation additives (UV protection additives), etc.

When one considers the freedom of choice for each variable, then one understands that the final product can be manufactured to meet the specific application needs of each customer, a point where there are limitations or is impossible to be implemented with the current state of the art.

With this proposal is clear that we can achieve:

A) constructing a plastic film of any width depending on the width of the individual plastic films to be made even if those films are of small width produced by simple conventional production lines.

B) giving the final plastic film different properties according to the region, if so required by the application, for example more antidrip capacity at middle film 1.

C) regulating the height of ventilation zones depending on individual plastic films widths.

D) regulating the amount of exhaust air depending on the type and form of sealings, their in-between distances and the overlap zone width as well as the type of materials used in each individual plastic film.

## Claims

1. Greenhouse or tunnel plastic film, produced by any combination of thermoplastic raw materials and **characterized by** the fact that it consists width wise of more than one separate plastic film of any width, which are bonded together two by two throughout their whole length within a common overlap area with any form of sectional sealing (6) repeated throughout the entire length of each overlap zone and in such a way that between two consecutive sectional sealings (6) openings (8) are created for ventilation purposes (figure 3), and the overlaps between the separate plastic films are made in such a way that the central plastic film (1) overlaps the plastic films (2 and 3) on both its sides and they too -if any- the close next ones and so on.

2. Greenhouse or tunnel plastic film, according to claim 1 where the sectional sealing (6) is of any shape, curved or linear, and is preferably linear and inclined at 30°-60° by the plastic film length.

3. Greenhouse or tunnel plastic film, according to claims 1 and 2 where openings created between successive sectional sealings are preferably same with one another.

4. Greenhouse or tunnel plastic film, according to claims 1 to 3, **characterized by** the fact that the individual plastic films that comprise it are of different width and preferably each pair on both sides of the central film (1) has the same width.

5. Greenhouse or tunnel plastic film, according to claims 1 to 4 where the individual plastic films that comprise it are of different composition and/or thickness so they may facilitate ventilation through the different companding of the plastic films created.

6. Greenhouse or tunnel plastic film, according to claims 1 to 5 **characterized by** the fact that individual plastic films that comprise it, contain different additives so that each film has different properties.

FIGURE 1

FIGURE 2

FIGURE 3

**EP 2 095 705 A2**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8172933 B
- FR 2788195
- JP 2005278581 B
- JP 2005143448 B
- JP 2004350506 B
- JP 2004097085 B
- RO 119243
- NL 9100069
- DE 3934375